(19) Europäisches Patentamt
European Patent Office
Office européen des brevets

(11) EP 0 765 909 B1

(12) EUROPÄISCHE PATENTSCHRIFT

(45) Veröffentlichungstag und Bekanntmachung des Hinweises auf die Patenterteilung:
**14.03.2001 Patentblatt 2001/11**

(51) Int Cl.$^7$: **C08L 23/10**, C08J 5/18

(21) Anmeldenummer: **96114872.3**

(22) Anmeldetag: **17.09.1996**

(54) **Polyolefinfolie mit Cycloolefinpolymer, Verfahren zu ihrer Herstellung und ihre Verwendung**

Polyolefin film containing cyclic olefin polymer, preparation method and use thereof

Feuille à base de polyoléfine et d'un polymère de cyclooléfine, procédé pour sa préparation et son utilisation

(84) Benannte Vertragsstaaten:
**DE FR GB IT**

(30) Priorität: **28.09.1995 DE 19536043**

(43) Veröffentlichungstag der Anmeldung:
**02.04.1997 Patentblatt 1997/14**

(73) Patentinhaber: **Ticona GmbH**
**65451 Kelsterbach (DE)**

(72) Erfinder:
- **Peiffer, Herbert, Dr.**
  **55126 Mainz (DE)**
- **Schlögl, Gunter, Dr.**
  **65779 Kelkheim (DE)**
- **Dries, Thomas, Dr.**
  **55270 Schwabenheim (DE)**
- **Osan, Frank, Dr.**
  **65779 Kelkheim (DE)**

(56) Entgegenhaltungen:
**EP-A- 0 477 797**

- **PATENT ABSTRACTS OF JAPAN vol. 018, no. 032 (C-1154), 18.Januar 1994 & JP-A-05 262898 (MITSUI PETROCHEM IND LTD), 12.Oktober 1993, & DATABASE WPI Derwent Publications Ltd., London, GB; AN 93-357261**
- **PATENT ABSTRACTS OF JAPAN vol. 018, no. 602 (M-1705), 16.November 1994 & JP-A-06 226935 (MITSUI PETROCHEM IND LTD), 16.August 1994, & DATABASE WPI Derwent Publications Ltd., London, GB; AN 94-299301**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 765 909 B1

## Beschreibung

Die vorliegende Erfindung betrifft eine Polyolefinfolie, die mindestens eine Schicht umfaßt, welche ein Polyolefin und ein Cycloolefinpolymer (COP) enthält. Die Erfindung betrifft ferner ein Verfahren zur Herstellung der Polyolefinfolie sowie ihre Verwendung.

Polyolefinfolien werden für viele verschiedene Anwendungen eingesetzt und müssen je nach Einsatzzweck modifiziert werden, um optimale Gebrauchseigenschaften zu erhalten. Diese gewünschten Gebrauchseigenschaften sind beispielsweise hohe mechanische Festigkeiten, gute optische Eigenschaften, gute Barrierewirkung oder gute Twisteigenschaften.

Im Stand der Technik wird dargestellt, wie die mechanischen Eigenschaften, insbesondere der Elastizitätsmodul, biaxial orientierter Folien verbessert werden kann. Es sind sowohl verfahrenstechnische Maßnahmen als auch Änderungen der Folienrezeptur bekannt. Einige Dokumente beschreiben, das Herstellungsverfahren und die Zusammensetzung gleichzeitig zu ändern.

Verfahrenstechnische Maßnahmen bestehen in der Anwendung der Längs-Quer-Längs-Streckung (Dreistufenstreckung) oder in der Anwendung des Bubble-Prozesses in Verbindung mit der Nachlängsstreckung. Dokumente, die über solche Streckverfahren berichten, sind EP-B-0 116 457 und GB-A-1 231 861.

Es ist auch bekannt, die mechanischen Festigkeiten biaxial orientierter Folien durch Zugabe von Kohlenwasserstoffharzen und/oder von Nukleierungsmitteln zum Olefinhomopolymer zu erhöhen. Beispiele hierfür sind in US-A-3,937,762, EP-A-0 406 642 oder in US-A-4,921,749 angegeben. Die Kombination von Nachlängsstreckung und Harzzugabe wird z. B. in der EP-A-0 079 520 beschrieben und führt zu einer weiteren Verbesserung der mechanischen Eigenschaften biaxial orientierter Folien.

Nachteile der Verfahrensmaßnahmen sind, daß hierdurch die Herstellkosten stark ansteigen und sich Probleme bei der Folienherstellung ergeben. Die Nachlängsstreckung ist gegenüber Störungen im Produktionsprozeß, z. B. durch Folienabrisse, sehr anfällig. Hohe Harzkonzentrationen führen ebenfalls zu Problemen bei der Folienherstellung. Insbesondere treten nach kurzer Zeit Ablagerungen an der Schnecke des Plastifizierextruders und an den Walzen der Längsstreckung auf. Harze in der Folie erhöhen die Migrationswerte, insbesondere in Fett, und die Neigung zum Warmblocken. Die Zugabe von Nukleierungsmitteln in den angegebenen Konzentrationen führt zu optischen Foliendefekten in Form von sogenannten "Stippen" und "Blasen", die äußerst unerwünscht sind. Außerdem ist das Regenerat derartiger Folien aufgrund von Agglomeratneigung des Regenerats im Folienherstellprozeß nicht mehr einsetzbar.

Die optischen Eigenschaften biaxial orientierter Polypropylenfolien können durch den peroxidischen Abbau des Polypropylens und durch den Einsatz von Nukleierungsmitteln verbessert werden. Entsprechende Schriften hierzu sind EP-A-0 477 797 und EP-A-0 406 642. Durch den peroxidischen Abbau wird die Molekulargewichtsverteilung des Polymeren eingeengt, da insbesondere die langen Molekülketten abgebaut werden. Mit dem peroxidischen Abbau sind jedoch auch Nachteile verbunden. Unter Umständen kann hierdurch die Streckbarkeit des Materials verschlechtert werden. Außerdem besteht durch den erhöhten Oligomergehalt die Gefahr, daß die Folien einen unerwünschten Geschmack/Geruch annehmen.

Die Barrierewirkung hinsichtlich Wasserdampf, Sauerstoff oder Geschmacksstoffen von biaxial orientierten Folien wird durch Beschichtung mit PVDC oder mit Acrylaten deutlich verbessert. Daneben erreicht man eine Verbesserung der Barriereeigenschaften auch durch Zugabe von Kohlenwasserstoffharzen zum Propylenhomopolymeren. In EP-A-0 468 333 und EP-A-0 247 898 wird hierüber berichtet. Die Beschichtung der Folie wird üblicherweise off line durchgeführt. Hierdurch erhöhen sich einerseits die Herstellkosten, und andererseits können die beschichteten Folien nicht mehr regeneriert werden.

Die Erzielung von guten Twisteigenschaften biaxial orientierter Folien wird in mehreren Schriften beschrieben, beispielsweise in GB-A-1 231 861, DE-A-35 35 472 oder EP-A-0 317 276. In der Regel werden dem Propylenhomopolymeren niedrigmolekulare Kohlenwasserstoffharze zugesetzt und spezielle Verfahrensparameter angewendet.

Zur Verbesserung spezieller Folieneigenschaften werden neben Kohlenwasserstoffharzen neuerdings auch Copolymere oder Ringöffnungspolymere von cyclischen Olefinen eingesetzt.

Die JP-A-5( =1993)-262 898 beschreibt einen zweiachsig gestreckten Film auf Polyolefinbasis, bestehend aus (A) 40 bis 98 Gew.-% eines kristallinen Polyolefins, (B) 2 bis 60 Gew.-% eines cyclischen Olefinharzes, das mindestens einen Typ aus der Gruppe von (B-1), (B-2), (B-3) und (B-4) darstellt, und (C) 0 bis 30 Gew.-% eines hydroalicyclischen Petroleumharzes.

(B-1) ist ein statistisches ethylencyclisches Olefincopolymer mit einem Ethylengehalt von 52 bis 90 Mol-%.
(B-2) ist ein Ringöffnungspolymer, welches über Metathesepolymerisation hergestellt wird und Doppelbindungen enthält (mindestens eine Doppelbindung je Wiederholeinheit ).
(B-3) ist die hydrierte Form von (B-2).
(B-4) ist ein pfropfmodifiziertes Produkt von (B-1), (B-2) oder (B-3).

Nachteilig an dem Film mit dieser Zusammensetzung sind folgende Punkte: Im Falle von (B-1) werden durch den hohen Ethylengehalt die Steifigkeit, die Optik und die Barriereeigenschaften verschlechtert. Im Falle von (B-2) führen die Doppelbindungen zu einer geringen Verarbeitungsstabilität der Schmelze, das Polymere neigt zur Vernetzung und damit zur Gelbildung. Bei (B-3) und bei (B-4) werden zusätzliche Verfahrensschritte angewendet, die zu einer Verteuerung des Produktes führen.

Weiterhin ist nachteilig, daß die beschriebenen Mischungen aus kristallinem Polyolefin und cyclischem Olefinharz keine homogenen Mischungen bilden. Das kristalline Polyolefin bildet Inselstrukturen im cyclischen Olefinharz (Meere), wodurch die Folieneigenschaften, insbesondere die optischen Eigenschaften und die Barrierewirkung, verbesserungsbedürftig sind.

Die Aufgabe der vorliegenden Erfindung bestand darin, eine Polyolefinfolie bereitzustellen, die sich durch hohe Festigkeitswerte und erhöhte Barrierewirkung gegenüber Durchtritt von Wasserdampf und Sauerstoff auszeichnet und daneben für den Twisteinschlag geeignet sein kann. Weiterhin soll die Folie einen erhöhten Glanz und eine verbesserte Transparenz aufweisen. Dabei sollen die anderen Folieneigenschaften, die im Hinblick auf deren Verwendung als Verpackungsfolie gefordert sind, nicht beeinträchtigt werden. Die Folie soll eine niedrige Reibung, ein geringes Migrationsverhalten, eine geringe Blockneigung und eine gute Kratzfestigkeit aufweisen. Die Nachteile des Nachlängsstreckprozesses wie technische Umbauten an der Produktionsmaschine, Störungen durch häufige Folienabrisse und ein hoher Restschrumpf der boPP-Folien sollen ebenfalls vermieden werden.

Diese Aufgabe wird gelöst durch eine Polyolefinfolie der eingangs genannten Gattung, deren kennzeichnende Merkmale darin bestehen, daß das Cycloolefinpolymer amorph ist und ein mittleres Molekulargewicht $M_w$ im Bereich von 200 bis 100 000 hat und dieses mittlere Molekulargewicht $M_w$ des Cycloolefinpolymeren höchstens 50 % des mittleren Molekulargewichts $M_w$ des Polyolefins beträgt und das Cycloolefinpolymer ein Homopolymer oder ein Copolymer mit höchstens 20 Gew.-%, bezogen auf das Gewicht des Polymeren, Comonomeranteil ist.

Die erfindungsgemäße Folie ist einschichtig oder mehrschichtig. Einschichtige Ausführungsformen sind wie die nachstehend beschriebene COP-haltige Schicht aufgebaut. Mehrschichtige Ausführungsformen sind mindestens zweischichtig und umfassen immer die COP-haltige Schicht und zumindest eine weitere Schicht, wobei die COP-haltige Schicht die Basis-, die Zwischen- oder die Deckschicht der mehrschichtigen Folie bilden kann. In einer bevorzugten Ausführungsform bildet die COP-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können. In einer weiteren bevorzugten Ausführungsform bildet die COP-haltige Schicht eine Zwischenschicht der Mehrschichtfolie. Weitere Ausführungsformen mit COP-haltigen Zwischenschichten sind fünfschichtig aufgebaut und haben beidseitig COP-haltige Zwischenschichten. In einer weiteren Ausführungsform kann die COP-haltige Schicht ein- oder beidseitig Deckschicht/en auf der Basis- oder Zwischenschicht bilden. Die Basisschicht ist im Sinne der vorliegenden Erfindung diejenige Schicht, welche mehr als 50 bis 100 %, vorzugsweise 70 bis 90 %, der Gesamtfoliendicke ausmacht. Die Deckschicht ist die Schicht, welche die äußerste Schicht der Folie bildet.

Je nach ihrem vorgesehenen Verwendungszweck kann die jeweilige Ausführungsform der Erfindung eine transparente oder eine nicht transparente Folie sein. Unter nicht transparenten Folien werden im Sinne der vorliegenden Erfindung solche Folien verstanden, deren Lichtdurchlässigkeit nach ASTM-D 1003-77 unter 95 %, vorzugsweise unter 75 %, liegt. Nicht transparente Ausführungsformen weisen neben der COP-haltigen Schicht zusätzlich eine pigment- und/oder vakuolenhaltige Schicht auf. Die opake Schicht enthält 1 bis 25 Gew.-%, vorzugsweise 1 bis 10 Gew.-% vakudeniniziierenden Füllstoff und/oder Pigment. Folien mit solchen opaken Schichten sind im Stand der Technik bekannt (z. B. deutsche Patentanmeldung P 43 01 897.1).

Die COP-haltige Schicht der erfindungsgemäßen Folie enthält ein Polyolefin, vorzugsweise ein Propylenpolymer, und ein COP sowie gegebenenfalls weitere zugesetzte Additive in jeweils wirksamen Mengen. Im allgemeinen enthält diese Schicht mindestens 50 Gew.-%, vorzugsweise 60 bis 99 Gew.-%, insbesondere 70 bis 98 Gew.-%, Polyolefin, bezogen auf das Gewicht der Schicht. Polyolefine sind Polymere aus Olefinen mit 2 bis 10 C-Atomen, vorzugsweise Ethylen-und/oder Propylenpolymere. Geeignete Polyolefine haben im allgemeinen ein mittleres Molekulargewicht $M_w$ von 150 000 bis 400 000.

Ein bevorzugtes Propylenpolymer enthält im allgemeinen 90 bis 100 Gew.-%, vorzugsweise 95 bis 100 Gew.-%, insbesondere 98 bis 100 Gew.-%, Propyleneinheiten und besitzt im allgemeinen einen Schmelzpunkt von 130°C oder höher, vorzugsweise 140 bis 170°C, und im allgemeinen einen Schmelzflußindex von 0,5 g/10 min bis 10 g/10 min, vorzugsweise 1,5 g/10 min bis 6 g/10 min, bei 230°C und einer Kraft von 21,6 N (DIN 53 735). Isotaktisches Propylenhomopolymer mit einem n-heptanlöslichen Anteil von 1 bis 15 Gew.-%, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere dar. Isotaktisches Propylenhomopolymer mit einem Kettenisotaxieindex von 85 bis 98 %, vorzugsweise 90 bis 98 %, ist besonders bevorzugt. Die angegebenen Gewichtsprozente beziehen sich auf das jeweilige Polymere.

Geeignete Propylenpolymere haben ein mittleres Molekulargewicht $M_w$ (Gewichtsmittel) im Bereich von 150

000 bis 400 000, vorzugsweise von 180 00 bis 350 000. Die Molekulargewichtsverteilung der bevorzugten Propylenpolymeren kann in breiten Grenzen variieren. $M_w/M_n$ beträgt im allgemeinen 2 bis 15, vorzugsweise 2 bis 6, insbesondere 3 bis 5. Die bevorzugten engen Molekulargewichtsverteilungen lassen sich beispielsweise durch einen peroxidischen Abbau des Polymeren erreichen.

Des weiteren ist eine Mischung aus den genannten Propylenhomo- und/oder -copolymeren und/oder -terpolymeren und anderen Polyolefinen geeignet. Die Mischung enthält mindestens 50 Gew.-%, insbesondere mindestens 75 Gew.-%, Propylenpolymerisat bezogen auf die Mischung. Geeignete andere Polyolefine in der Polymermischung sind beispielsweise Polyethylene, insbesondere HDPE, LDPE, LLDPE, wobei der Anteil dieser Polyolefine im Bereich von 50 bis 5 Gew.-%, vorzugsweise 10 bis 40 Gew.-%, bezogen auf die Polymermischung, liegt.

Erfindungsgemäß enthält die COP-haltige Schicht bzw. die Folie bei einschichtigen Ausführungsformen ein Cycloolefinpolymer (COP) in einer Menge von weniger als 50 Gew.-%, vorzugsweise 1 bis 40 Gew.-%, insbesondere 2 bis 30 Gew.-%, bezogen auf das Gewicht der Schicht bzw. bezogen auf das Gewicht der Folie bei einschichtigen Ausführungsformen.

Es ist wesentlich für die vorliegende Erfindung, daß die Cycloolefinpolymeren mit dem Olefinpolymeren, vorzugsweise Polypropylen, gut verträglich sind und mit diesem eine homogene Mischung bilden. Eine gute Verträglichkeit wird durch die Berücksichtigung von zwei Kriterien bei der Auswahl geeigneter Cycloolefinpolymeren erzielt. Zum einen muß das mittlere Molekulargewicht $M_w$ des COP innerhalb gewisser Genzen liegen und zum anderen muß das $M_w$ des COP in einem gewissen Verhältnis zum $M_w$ des Olefinpolymeren stehen.

Erfindungsgemäß geeignete Cycloolefinpolymere haben ein mittleres Molekulargewicht $M_w$ (Gewichtsmittel) im Bereich von 200 bis 100 000, vorzugsweise 200 bis 20 000, insbesondere 500 bis 10 000. Eine besonders gute Verträglichkeit oder Mischbarkeit der Cycloolefinpolymeren mit der Polymermatrix, d.h. insbesondere mit dem Polypropylen wird beim Einsatz von niedermolekularen Cycloolefinpolymeren mit einem bevorzugten $M_w$ von 500 bis 5000 erreicht.

Zusätzlich ist für vorliegende die Erfindung zu beachten, daß das $M_w$ des Cycloolefinpolymeren deutlich niedriger liegt als das $M_w$ des Polyolefins bzw. Propylenpolymeren, welches als weiterer Hauptbestandteil in der Schicht enthalten ist. Das $M_w$ des Cycloolefinpolymeren muß 0,05 - 50 % des $M_w$ des Polyolefins bzw. Propylenpolymeren betragen. Vorzugsweise beträgt das $M_w$ des COP 0,1 bis 30 %, insbesondere 0,1 bis 20 % des $M_w$ des Polyolefins oder Polypropylens. Die Prozentangabe bezieht sich auf das höhere $M_w$ des Polyolefins.

Überraschenderweise sind die Mischungen aus COP und Polyolefin, insbesondere Polypropylen dann homogen, wenn COPs mit dem vorstehend angegebenen $M_w$ ausgewählt werden und die mittleren Molekulargewichte der beiden Komponenten in der beschriebenen Weise auf einander abgestimmt werden. Die Folien dieser Zusammensetzung zeigen deutlich verbesserte optische Eigenschaften gegenüber COP-haltigen Folien nach dem Stand der Technik. Das Erscheinungsbild der Folie ist homogener. Die Trübung ist reduziert. Es treten keine optischen Störstellen durch Unverträglichkeiten auf.

Weiterhin wurde gefunden, daß für die Erfindung solche COP besonders geeignet sind, die im wesentlichen amorph sind, d.h. eine Kristallinität von kleiner als 5 Gew.%, vorzugsweise 0 bis 3 Gew.-%, insbesondere 1 bis 2 Gew.- haben. Weiterhin können geeignete COPs über ihre Glastemperatur $T_g$ charakterisiert werden, die im allgemeinen im Bereich von 0 bis 300°C, vorzugsweise im Bereich von 20 bis 200°C liegt.

Es hat sich weiterhin als besonders vorteilhaft erwiesen, solche Cycloolefinpolymere in der Folie einzusetzen, deren Molekulargewichtsverteilung nicht zu breit ist. Vorzugsweise beträgt das Verhältnis von $M_w/M_n$ 1 bis 5, insbesondere 1,5 bis 4. Folien nach dieser Ausführungsform der Erfindung haben besonders niedrige Migrationswerte und niedrige extrahierbare Anteile, und die Neigung der Folie zum Verkleben ist besonders gering.

Cycloolefinpolymere (COP) sind Homopolymerisate, welche nur aus einer Art von Cycloolefinen aufgebaut sind, oder Copolymerisate, welche aus Cycloolefinen und Comonomeren aufgebaut sind (COC), wobei der Comonomeranteil höchsten 20 Gew.-%, bezogen auf das Gewicht des Cycloolefinpolymeren, beträgt. Cycloolefine sind einfach oder mehrfach ungesättigte polycyclische Ringsysteme wie Cycloalkene, Bicycloalkene, Tricycloalkene oder Tetracycloalkene. Die Ringsysteme können einfach oder mehrfach substituiert sein. Bevorzugt sind Cycloolefine der nachstehenden Formeln I, II, III, IV, V oder VI, worin $R^1$, $R^2$, $R^3$, $R^4$, $R^5$, $R^6$, $R^7$ und $R^8$ gleich oder verschieden sind und ein Wasserstoffatom, einen $C_6$-$C_{20}$-Aryl- oder $C_1$-$C_{20}$-Alkylrest oder ein Halogenatom oder ein monocyclisches Olefin der Formel VII, worin $_n$ eine Zahl von 2 bis 10 ist, bedeuten.

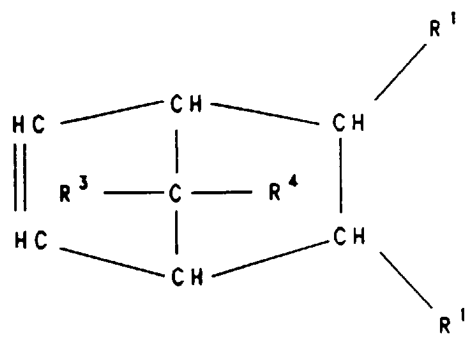

(I),

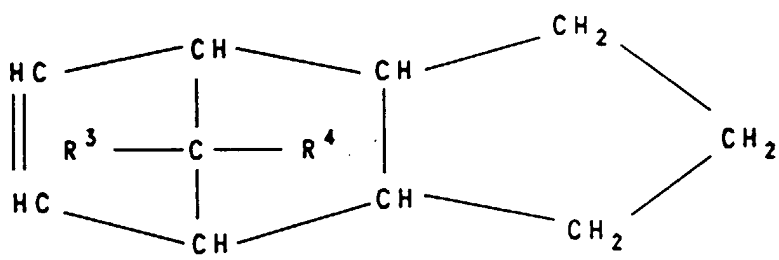

(II),

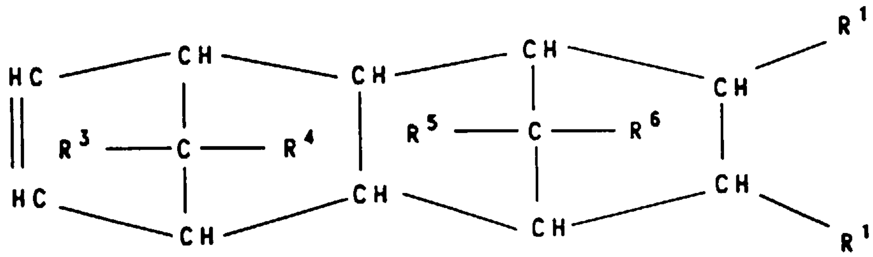

(III),

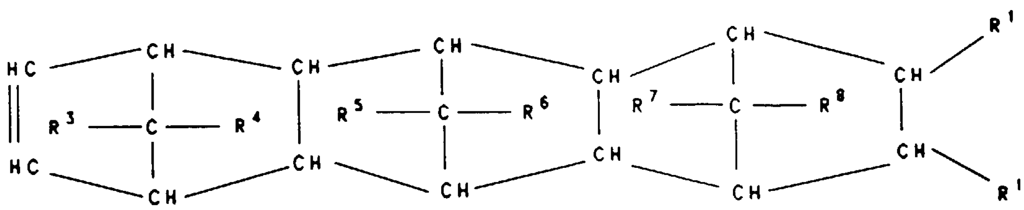

(IV),

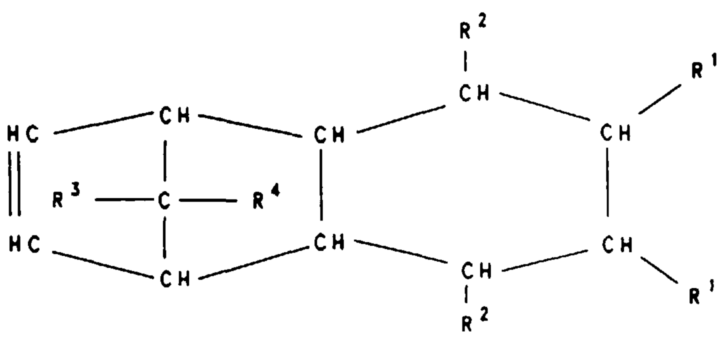

(V),

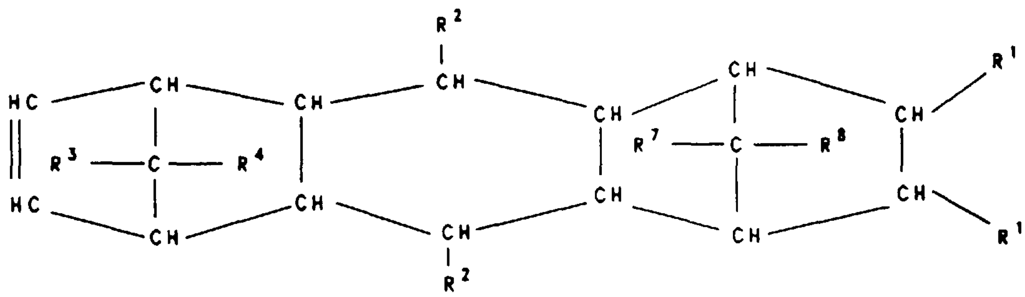

(VI).

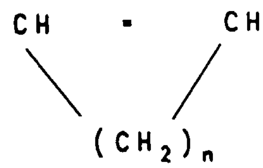

(VII)

Von den vorstehend beschriebenen COP sind solche bevorzugt, die aus monoalkylierten oder unsubstituierten Cycloolefinen aufgebaut sind. Besonders bevorzugt sind als Cycloolefinhomopolymere Polynorbornen, Polydimethyloctahydronaphthalin, Polycyclopenten und Poly(5-methyl)norbornen. Die Cycloolefinpolymere können auch verzweigt sein. Derartige Produkte können Kamm- oder Sternstrukturen aufweisen.

Gegebenenfalls können die vorstehend beschriebenen Cycloolefine auch mit geringen Anteilen an Comonomeren copolymerisiert werden. Diese Cycloolefincopolymere (COC) enthalten bis zu 20 Gew.-% vorzugsweise 1-15 Gew.-% insbesonder 1-8 Gew.-% bezogen auf das Gewicht des COC, Comonomer. Als Comonomere sind Olefine mit 2 bis 6 C-Atomen, insbesondere Ethylen und Butylen bevorzugt.

Die Herstellung der Cycloolefinpolymere kann mit Hilfe von Übergangsmetall-katalysatoren erfolgen. Herstellverfahren sind beispielsweise in DD-A-109 225, EP-A-0 407 870 und EP-A-0 485 893 beschrieben, auf die hiermit ausdrücklich Bezug genommen wird. Zur Molgewichtsregulierung bei der Herstellung kann vorteilhaft Wasserstoff eingesetzt werden. Durch gezielte Auswahl des Katalysators und der Reaktionsbedingungen können ebenfalls geeignete Molekulargewichte eingestellt werden. Detaillierte Angaben hierzu finden sich in den oben genannten Schriften.

Die erfindungsgemäße mehrschichtige Ausführungsform der Folie umfaßt mindestens eine weitere transparente oder nicht transparente Schicht, welche die Basisschicht, eine Zwischenschicht oder eine siegelfähige oder nicht siegelfähige Deckschicht der erfindungsgemäßen Folie sein kann und nachfolgend als die "andere" Schicht bezeichnet wird.

Die andere Schicht enthält im allgemeinen 75 bis 100 Gew.-%, insbesondere 90 bis 99,5 Gew.-%, olefinische Polymere mit 2 bis 10 Kohlenstoffatomen, jeweils bezogen auf das Gewicht der anderen Schicht, und gegebenenfalls Additive in jeweils wirksamen Mengen.

Beispiele für derartige olefinische Polymere sind

- ein Propylenhomopolymer oder
- ein Copolymer von
  - Ethylen und Propylen oder
  - Ethylen und Butylen-1 oder
  - Propylen und Butylen-1 oder
- ein Terpolymer von
  - Ethylen und Propylen und Butylen-1 oder
- eine Mischung aus zwei oder mehreren der genannten Homo-, Co- und Terpolymeren oder
- ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

- statistische Ethylen-Propylen-Copolymere mit

einem Ethylengehalt von 1 bis 10 Gew.-%, bevorzugt 2,0 bis 8 Gew.-%, oder
statistische Propylen-Butylen-1-Copolymere mit
einem Butylengehalt von 2 bis 25 Gew.-%, bevorzugt 4 bis 20 Gew.-%,

jeweils bezogen auf das Gesamtgewicht des Copolymeren, oder statistische Ethylen-Propylen-Butylen-1-Terpolymere mit
einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder ein Blend aus einem Ethylen-Propylen-Butylen-1-Terpolymeren und
einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das in der/den anderen Schicht/en eingesetzte Propylenhomopolymere enthält 98 bis 100 Gew.-% Propyleneinheiten und besitzt im allgemeinen einen Schmelzpunkt von 140°C oder höher, vorzugsweise 150 bis 170°C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min. Die angegebenen Gewichtsprozente beziehen sich auf das Polymere.

Die in der/den anderen Schicht/en eingesetzten vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt im allgemeinen im Bereich von 120 bis 140°C. Das vorstehend beschriebene Blend aus Co- und Terpolymeren hat im allgemeinen einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen. Andere Schichten aus Co- und/oder Terpolymeren bilden die Deckschicht/en von siegelfähigen Ausführungsformen der Folie.

In einer weiteren Ausführungsform können die in der COP-haltigen Schicht und/oder anderen Schicht eingesetzten Propylenpolymeren durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$A = MFI_2 / MFI_1$
$MFI_1$ = Schmelzflußindex des Propylenpolymers vor dem Zusatz des organischen Peroxids
$MFI_2$ = Schmelzflußindex des peroxidisch abgebauten Propylenpolymeren

Der Abbaufaktor A des Propylenpolymeren liegt in einem Bereich von 3 bis 15, vorzugsweise 6 bis 10. Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 200 µm, wobei 10 bis 100 µm, insbesondere 20 bis 80 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 2 bis 8 µm, bevorzugt sind. Die angegebenen Werte beziehen sich jeweils auf eine Zwischenschicht. Die Dicke der Deckschicht/en wird unabhängig von anderen Schichten gewählt und liegt bevorzugt im Bereich von 0,1 bis 10 µm, insbesondere 0,2 bis 5 µm, vorzugsweise 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Um bestimmte Eigenschaften der erfindungsgemäßen Polyolefinfolie noch weiter zu verbessern, können sowohl die einschichtige Folie als auch die COP-haltige Schicht und/oder die andere Schicht, d. h. die Basis-, die Zwischen- und/oder die Deckschicht/en der Mehrschichtfolie, Zusätze in einer jeweils wirksamen Menge enthalten. Bevorzugte Additive sind mit dem Polymeren verträgliche niedermolekulare Kohlenwasserstoffharze und/oder vorzugsweise Antistatika und/oder Antiblockmittel und/oder Gleitmittel und/oder Stabilisatoren und/oder Neutralisationsmittel.

Alle Mengenangaben in der folgenden Ausführung in Gewichtsprozent (Gew.-%) beziehen sich jeweils auf die Schicht oder Schichten, der oder denen das Additiv zugesetzt sein kann.

Niedermolekulare Harze können zur weiteren Verbesserung gewünschter physikalischer Eigenschaften (z. B. Foliensteifigkeit, Schrumpf, Optik, Wasserdampfdurchlässigkeit (WDD)) zugesetzt werden. Es hat sich als besonders vorteilhaft erwiesen, die Kohlenwasserstoffharze der COP-Schicht zuzusetzen, wenn diese Schicht die Basisschicht bildet. Verträgliche Kohlenwasserstoffharze sind niedermolekulare Polymere, deren Molekulargewicht $M_w$ im allgemeinen in einem Bereich von 300 bis 8 000, vorzugsweise 400 bis 5 000, vorzugsweise 500 bis 2 000, liegt. Der Anteil des Harzes liegt in einem Bereich von 1 bis 30 Gew.-%, vorzugsweise 2 bis 30 Gew.-%, bezogen auf das Gewicht der Schicht. Der Erweichungspunkt des Harzes liegt zwischen 60 und 180 °C (gemessen nach DIN 1995-U4, entspricht ASTM E-28), vorzugsweise über 100 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Die Antiblockmittel werden bevorzugt den Deckschichten zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2/s$.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phe-nolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3, 5-di-Tertiärbutyl-4-Hydroxy-benzyl)benzol sind besonders vorteilhaft.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2/g$. Im allgemeinen wird das Neutralisationsmittel in einer Menge von 0,02 bis 0,1 Gew.-% zugesetzt.

Die Erfindung betrifft weiterhin ein Verfahren zur Herstellung der erfindungsgemäßen Folie nach dem an sich bekannten Extrusionsverfahren. Im Rahmen dieses Verfahrens wird so vorgegangen, daß die Polymeren oder die Polymermischung in einem Extruder komprimiert und erwärmt werden, anschließend die der Folie bzw. den einzelnen Schichten der Folie entsprechenden Schmelzen durch eine Flachdüse extrudiert bzw. coextrudiert werden, die so erhaltene Folie zur Verfestigung auf einer oder mehreren Walze/n abgezogen wird, die Folie gegebenenfalls orientiert, die Folie anschließend thermofixiert und gegebenenfalls an der zur Behandlung vor-gesehenen Oberfläche corona- oder flammbehandelt wird.

Es hat sich als besonders günstig erwiesen, die Abzugswalze oder -walzen, durch die die ausgepreßte Folie auch abgekühlt und verfestigt wird, durch einen Heizund Kühlkreislauf bei einer Temperatur von 10 bis 100°C zu halten, bevorzugt 20 bis 70°C.

Die so erhaltene Vorfolie wird vorzugsweise längs und quer zur Extrusionsrichtung gestreckt, was zu einer biaxialen Orientierung der Molekülketten führt. Die biaxiale Orientierung kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist. In Längsrichtung wird vorzugsweise 4:1 bis 9:1, vorzugsweise 5,5:1 bis 8,5:1, und in Querrichtung vorzugsweise 6:1 bis 11:1 gestreckt. Das Längsstrecken wird man zweckmäßigerweise mit Hilfe zweier entsprechend dem angestrebten Streckverhältnis verschieden

schnellaufender Walzen durchführen und das Querstrecken mit Hilfe eines entsprechenden Kluppenrahmens.

Die Temperaturen, bei denen die Längs- und die Querstreckung durchgeführt werden, können in einem großen Bereich variieren und richten sich nach der jeweiligen Zusammensetzung der Schichten und nach den gewünschten Eigenschaften der Folie. Im allgemeinen wird die Längsstreckung bei 80 bis 150°C, vorzugsweise 100 bis 140°C, und die Querstreckung bei 120 bis 170°C, vorzugsweise 150 bis 160°C, durchgeführt.

An die biaxiale Streckung der Folie schließt sich ihre Thermofixierung (Wärmebehandlung) an, wobei die Folie etwa 0,1 bis 10 s lang bei einer Temperatur von 100 bis 160°C, vorzugsweise 110 bis 130°C, gehalten wird. Anschließend wird die Folie in üblicher Weise mit einer Aufwickeleinrichtung aufgewickelt.

Bevorzugt wird/werden wie oben erwähnt nach der biaxialen Streckung eine oder beide Oberfläche/n der Folie nach einer der bekannten Methoden corona- oder flammbehandelt werden. Die Behandlungsintensitäten liegen im üblichen Rahmen, wobei 37 bis 50 mN/m, vorzugsweise 39 bis 45 mN/m, bevorzugt sind. Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaffen der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Die Cycloolefinpolymere werden entweder als reines Granulat oder als granuliertes Konzentrat (Masterbatch) in die Folie eingearbeitet, indem das Polyolefingranulat oder -pulver mit dem Cycloolefinpolymer bzw. dem COP-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren wesentlich, daß die Extrusionstemperatur oberhalb der Glastemperatur $T_g$ des Cycloolefinpolymeren liegt. Im allgemeinen liegt die Extrusionstemperatur mindestens 5°C, vorzugsweise 10 bis 180°C, insbesondere 15 bis 150°C, über der $T_g$ des Cycloolefinpolymeren.

Die erfindungsgemäße Folie zeichnet sich durch hervorragende mechanische Festigkeiten aus. Der Elastizitätsmodul der Folie in Längsrichtung ist größer als 2 200 N/mm$^2$, vorzugsweise größer als 2400 N/mm$^2$, und in Querrichtung größer als 4 000 N/mm$^2$, vorzugsweise größer als 4200 N/mm$^2$. Überraschenderweise sind die erfindungsgemäßen Folien selbst mit einer Dicke von unter 20 µm noch ausreichend steif, um auf den modernen schnelllaufenden Verpackungsmaschinen verarbeitet zu werden. Mit dieser Folie ist es daher möglich, den Kunststoffanteil von Verpackungen weiter zu senken, ohne daß Qualitätseinbußen der Verpakkung auftreten. Weiterhin zeichnen sich die Folien durch eine deutlich verbesserte Barriere, vor allem gegenüber Wasserdampf und Sauerstoff, aus.

Die Erfindung wird nun anhand von Ausführungsbeispielen noch näher erläutert.

**Beispiel 1**

Es wurde durch Coextrusion und durch anschließende stufenweise Orientierung in Längs- und in Querrichtung eine transparente dreischichtige Folie mit symmetrischem Aufbau mit einer Gesamtdicke von 20 µm hergestellt. Die Deckschichten hatten eine Dicke von jeweils 0,6 µm.

| A-Basisschicht (= COP-haltige Schicht): | |
|---|---|
| 94,85 Gew.-% | isotaktisches Polypropylen der Firma Solvay mit dem Markennamen ®Eltex PHP 405 / $M_W$ = 250.000 |
| 5,0 Gew.-% | Norbornenhomopolymer mit einer Glastemperatur von 184°C und mit einem mittleren Molekulargewicht $M_W$ von 3 000 |
| 0,15 Gew.-% | N,N-bis-ethoxyalkylamin |

Das $M_W$ des Norbonenhomopolymers beträgt 1,2 % des $M_w$ des Eltex PHP 405.

| B-Deckschichten: | |
|---|---|
| 98,77 Gew.-% | statistisches Ethylen-Propylen-Copolymeres mit einem $C_2$Gehalt von 4,5 Gew.-% |
| 0,33 Gew.-% | $SiO_2$ als Antiblockmittel mit einer mittleren Teilchengröße von 2 µm |
| 0,90 Gew.-% | Polydimethylsiloxan mit einer Viskosität von 30 000 $mm^2/s$ |

Die Herstellungsbedingungen in den einzelnen Verfahrensschritten waren:

| | | | |
|---|---|---|---|
| Extrusion | Temperaturen | A-Schicht: | 280°C |
| | | B-Schichten: | 280°C |
| | Temperatur der Abzugswalze: | | 30°C |
| Längsstreckung | Temperatur: | | 130°C |
| | Längsstreckverhältnis: | | 5,0 |
| Querstreckung | Temperatur: | | 160°C |
| | Querstreckverhältnis: | | 10,0 |
| Fixierung | Temperatur: | | 140°C |
| | Konvergenz: | | 15 % |

**Beispiel 2**

Im Vergleich zu Beispiel 1 wurde lediglich die Konzentration des Norbornenhomopolymers von 5 auf 10 Gew.-% in der Basisschicht geändert. Entsprechend enthielt die Basisschicht nur noch 89,85 Gew.-% Polypropylen.

**Beispiel 3**

Im Vergleich zu Beispiel 1 wurde die Konzentration des Norbornenhomopolymers von 5 auf 25 Gew.-% in der Basisschicht geändert. Entsprechend enthielt die Basisschicht nur noch 74,85 Gew.-% Polypropylen. Die Herstellbedingungen in den einzelnen Verfahrensschritten waren jetzt wie folgt:

| | | | |
|---|---|---|---|
| Extrusion | Temperaturen | A-Schicht: | 260°C |
| | | B-Schichten: | 260°C |
| | Temperatur der Abzugswalze: | | 30°C |
| Längsstreckung | Temperatur: | | 130°C |
| | Längsstreckverhältnis: | | 6,5 |
| Querstreckung | Temperatur: | | 155°C |
| | Querstreckverhältnis: | | 8,0 |
| Fixierung | Temperatur: | | 140°C |
| | Konvergenz: | | 15 % |

Die Folie hat ausgezeichnete Twisteigenschaften.

**Vergleichsbeispiel 1**

Im Vergleich zu Beispiel 1 wurde die Konzentration des Norbornenhomopolymers von 5 auf 0 Gew.-% in der Basisschicht geändert. Entsprechend enthielt die Basisschicht 89,85 Gew.-% Polypropylen und kein Norbornenhomopolymer mehr.

**Vergleichsbeispiel 2**

Im Vergleich zu Beispiel 1 wurde ein statistisches ethylenzyklisches Olefincopolymer mit einem Ethylengehalt von 60 Mol-% genommen ((B-1), JP-A-5( =1993)-262 898). Die Konzentration des Olefincopolymeren wurde nicht

geändert. Entsprechend enthielt die Basisschicht weiterhin 84,85 Gew.-% Polypropylen. Das Olefincopolymere bildet mit dem Propylenhomopolymeren keine homogene Mischung. Dadurch sind insbesondere die optischen Eigenschaften der Folie verschlechtert.

**Vergleichsbeispiel 3**

Im Vergleich zu Beispiel 3 wurde lediglich die Konzentration des Norbornenhomopolymers von 25 auf 0 Gew.-% in der Basisschicht geändert. Die Folie hat ihre guten Twisteigenschaften verloren.
Die Eigenschaften der in den Beispielen und Vergleichsbeispielen beschriebenen Folien sind in der beigefügten Tabelle aufgelistet.
Zur Charakterisierung der Rohstoffe und der Folien wurden die folgenden Meß-methoden benutzt:

<u>Schmelzflußindex</u>

Der Schmelzflußindex wurde in Anlehnung an DIN 53 735 bei 21,6 N Belastung und 230°C gemessen.

<u>Schmelzpunkt</u>

DSC-Messung, Maximum der Schmelzkurve, Aufheizgeschwindigkeit 20°C/min.

<u>Glanz</u>

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

<u>Kristallinität</u>

Die Kristallinität wurde mit Hilfe röntgenographischer Methoden bestimmt. Hierbei wurden die korrigierten gebeugten Röntgen-Intensitäten den Anteilen der amorphen und kristallinen Phasen proportional gesetzt.

<u>Glastemperatur</u>

Die Proben wurden mit Hilfe der DSC (Differential-Scanning-Calorimetry) untersucht. Die Aufheizgeschwindigkeit betrug 20 K/min. Um die thermische Vorgeschichte in der Probe zu eliminieren, wurde die Probe im DSC-Gerät zunächst über die Glastemperatur $T_g$ erhitzt, rasch abgekühlt und dann erneut erhitzt (zweites Aufheizen). Aus dem Thermogramm für das zweite Aufheizen wurde die Temperatur für den Glasübergang als halbe Stufenhöhe entnommen.

<u>Vicat-Erweichungstemperatur</u>

Die Vicat-Erweichungstemperatur VST/B/120 wurde nach ISO 306, DIN 53 460 gemessen.

<u>Wasserdampf- und Sauerstoffdurchlässigkeit</u>

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

<u>Trübung</u>

Die Trübung der Folie wurde in Anlehnung an ASTM-D 1003-52 gemessen.

<u>Oberflächenspannung</u>

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70°C vortemperierten Wärmeofen gebracht und dort über 2 h belassen. Danach wird für 30 min auf Raumtemperatur (21°C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Molekulargewichtsbestimmung

Das mittlere Molekulargewicht $M_w$ (Gewichtsmittel) welches in der Beschreibung, in den Tabellen und den Ansprüchen angegeben ist, gibt das Gewichtsmittel des Molekular-gewichts an. Zur Bestimmung des mittleren Molekulargewichts $M_w$ wird die Drei-Detektor-Gelpermeationschromatographie verwendet (0,1 Gew.-% Lösung, 135 °C, Lösungsmittel Orthodichlorbenzol, PE-Standard). Die Detektion erfolgt mittels UV-Absorptionsspektroskopie bei verschiedenen Wellenlängen sowie mittels Brechungsindex und Lichtstreuvermögen der Fraktionen. Die Eichung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte (DIN 55 672 Teil 1).

Reifestigkeit und Reißdehnung

Die Reißfestigkeit und die Reißdehnung werden nach DIN 53 455 bestimmt.

E-Modul

Der E-Modul wird gemäß DIN 53 457 bzw. ASTM 882 bestimmt.

Bleibende Dehnung

Aus der Folie wurde ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10%/min gedehnt. Nach einer Dehnung von 10 %, d.h. bei einer Probenlänge von 220 mm, wurde die Probe automatisch mit gleich Geschwindigkeit entspannt. Die Bestimmung der bleibenden Dehnung aus dem Kraft-Dehnungs-Diagramm ist in der beigefügten Figur 1 schematisch dargestellt. Die bleibende Dehnung berechnet sich dabei gemäß

$$D_b = X\% / 10\% * 100\%.$$

Beurteilung der Mischbarkeit

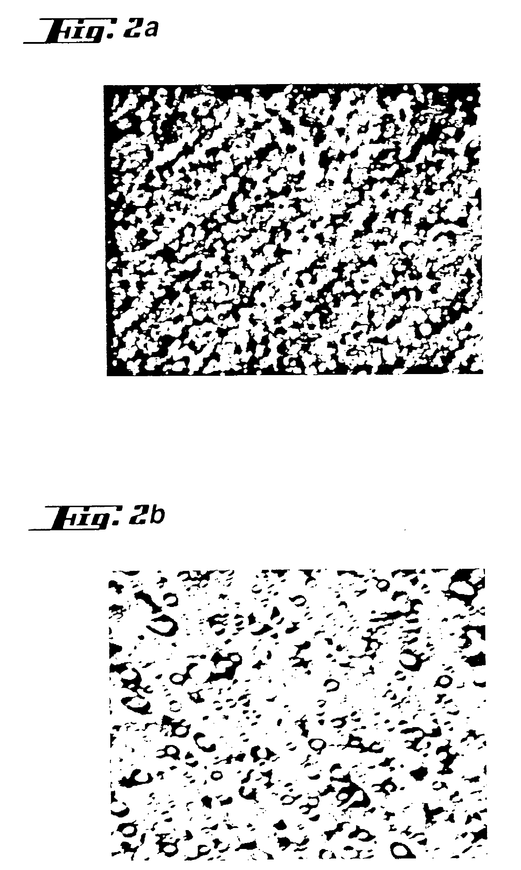

Die Mischbarkeit zwischen dem COP und dem Olefinpolymeren wird mit Hilfe von lichtmikroskopischen Aufnahmen beurteilt. Aus der Folie wird dazu senkrecht zur Oberfläche ein ca. 10 µm dickes Stück rausgeschnitten. Von diesem Schnitt (Mikrotom) wird eine lichtmikroskopische Aufnahme im Durchlicht angefertigt. Ergibt sich eine Struktur gemäß Figur 2a, so liegt eine homogene Mischung vor. Bildet sich dagegen eine Struktur gemäß Figur 2b, so liegt keine homogene Mischung vor (Inseln und Meere). Der Mikrotomschnitt wird zweckmäßigerweise an der nicht orientierten Folie durchgeführt.

| | COC-Anteil in Basis Gew.-% | λ *λq | E-Modul längs/quer N/mm² | Wasserdampf-barriere g/m²d | Glanz | Trübung % | bleibende Dehnung längs/quer % |
|---|---|---|---|---|---|---|---|
| B1 | 5 | 5*10 | 2700/4500 | 1,15 | 125 | 1,5 | - |
| B2 | 10 | 5*10 | 2900/4700 | 0,93 | 130 | 1,5 | - |
| B3 | 25 | 6,5*8,0 | 3300/3900 | - | 130 | 1,5 | 74/70 |
| VB1 | 0 | 5*10 | 2100/4200 | 1,4 | 115 | 3 | - |
| VB2 | 5 | 5*10 | 2200/4150 | 1,35 | 100 | 3,5 | - |
| VB3 | 0 | 6,5*8,0 | 2200/4000 | 1,4 | 115 | 2,5 | 52/42 |

**Patentansprüche**

1. Polyolefinfolie, die mindestens eine Schicht umfaßt, welche mindestens 50 Gew.-% Polyolefin und weniger als 50 Gew.-% Cycloolefinpolymer (COP), jeweils bezogen auf das Gewicht der Schicht, enthält, dadurch gekennzeichnet, daß das Cycloolefinpolymer amorph ist und ein mittleres Molekulargewicht $M_w$ im Bereich von 200 bis 100 000 hat und dieses mittlere Molekulargewicht $M_w$ des Cycloolefinpolymeren höchstens 50 % des mittleren Molekulargewichts $M_w$ des Polyolefins beträgt und das Cycloolefinpolymer ein Homopolymer oder ein Copolmyer mit höchstens 20 Gew.-% Comonomeranteil ist.

2. Polyolefinfolie nach Anspruch 1, dadurch gekennzeichnet, daß die COP-haltige Schicht 60 bis 99 Gew.-% eines Polyolefins, vorzugsweise eines Propylenpolymeren, und 1 bis 40 Gew.-% Cycloolefinpolymer, jeweils bezogen auf das Gewicht der Schicht, enthält.

3. Polyolefinfolie nach Anspruch 1 und/oder 2, dadurch gekennzeichnet, daß das Polyolefin, vorzugsweise Propylenpolymer, ein mittleres Molekulargewicht $M_w$ von 150 000 bis 400 000 aufweist.

4. Polyolefinfolie nach einem oder mehreren der Ansprüche 1 bis 3, dadurch gekennzeichnet, daß das Polyolefin, vorzugsweise Propylenpolymer, eine derartige Molekulargewichtsverteilung aufweist, daß $M_w/M_n$ im Bereich von 2 bis 15, vorzugsweise im Bereich von 2 bis 6, liegt.

5. Polyolefinfolie nach einem oder mehreren der Ansprüche 1 bis 4, dadurch gekennzeichnet, daß das mittlere Molekulargewicht $M_w$ des Cycloolefinpolymeren 200 bis 20 000 beträgt und höchstens 50 % des mittleren Molekulargewichts $M_w$ des Polyolefins beträgt.

6. Polyolefinfolie nach einem oder mehreren der Ansprüche 1 bis 5, dadurch gekennzeichnet, daß das Cycloolefinpolymer eine derartige Molekulargewichtsverteilung aufweist, daß $M_w/M_n$ im Bereich von 1 bis 5 liegt.

7. Polyolefinfolie nach einem oder mehreren der Ansprüche 1 bis 6, dadurch gekennzeichnet, daß das Cycloolefinpolymer Polynorbornen, Polydimethyloctahydronaphthalin, Polycyclopenten oder Poly(5-methyl)norbornen ist

8. Polyolefinfolie nach einem oder mehreren der Ansprüche 1 bis 7, dadurch gekennzeichnet, daß die Folie eine weitere transparente Schicht enthält und die Folie eine Trübung, gemessen nach ASTM-D 1003-52, von kleiner 3,0 aufweist.

9. Polyolefinfolie nach Anspruch 8, dadurch gekennzeichnet, daß die transparente Schicht 75 bis 100 Gew.-% eines $\alpha$-olefinischen Polymeren enthält.

10. Polyolefinfolie nach einem oder mehreren der Ansprüche 1 bis 9, dadurch gekennzeichnet, daß die Folie eine weitere opake Schicht enthält und die Folie eine Lichtdurchlässigkeit von unter 95 %, gemessen nach ASTM-D 1003-77 aufweist.

11. Polyolefinfolie nach Anspruch 10, dadurch gekennzeichnet, daß die opake Schicht 1 bis 25 Gew.-%, vorzugsweise 1 bis 10 Gew.-%, vakuoleniniziierenden Füllstoff und/oder Pigment enthält, jeweils bezogen auf das Gewicht der Schicht.

12. Polyolefinfolie nach einem oder mehreren der Ansprüche 1 bis 11, dadurch gekennzeichnet, daß die COP-haltige Schicht die Basisschicht, eine Zwischenschicht oder eine Deckschicht der Folie bildet.

13. Polyolefinfolie nach einem oder mehreren der Ansprüche 1 bis 11, dadurch gekennzeichnet, daß die transparente oder opake Schicht die Basisschicht, eine Zwischenschicht oder eine Deckschicht der Folie bildet.

14. Polyolefinfolie nach einem oder mehreren der Ansprüche 1 bis 13, dadurch gekennzeichnet, daß das Polypropylen der Basis-, einer Zwischen- und/oder einer Deckschicht peroxidisch abgebaut ist.

15. Polyolefinfolie nach einem oder mehreren der Ansprüche 1 bis 7, dadurch gekennzeichnet, daß die Folie einschichtig ist und aus der COP-haltigen Schicht besteht.

16. Polyolefinfolie nach einem oder mehreren der Ansprüche 1 bis 15, dadurch gekennzeichnet, daß die Folie mindestens monoaxial, vorzugsweise biaxial orientiert ist.

**17.** Verfahren zur Herstellung einer Polyolefinfolie, enthaltend weniger als 50 Gew.-% eines Cycloolefinpolymer nach Anspruch 1, bei welchem die die Folie bildenden Polymeren und/oder Polymermischungen in einem Extruder komprimiert und erwärmt werden, anschließend die Schmelze/n durch eine Flachdüse extrudiert werden, die so erhaltene Folie auf einer oder mehreren Walzen abgezogen wird, die Folie gegebenenfalls orientiert und thermofixiert und oberflächenbehandelt wird, dadurch gekennzeichnet, daß die Extrusionstemperatur oberhalb der Glastemperatur des amorphen Cycloolefinpolymeren liegt.

**18.** Verwendung einer Folie nach einem oder mehreren der Ansprüche 1 bis 16 als Verpackungsfolie, Dreheinschlagsfolie, Barrierefolie oder zur Laminierung oder Bedruckung.

**19.** Verpackung enthaltend eine Folie nach einem oder mehreren der Ansprüche 1 bis 16.

**Claims**

**1.** A polyolefin film which includes at least one layer containing at least 50 % by weight of polyolefin and less than 50 % by weight of cycloolefin polymer (COP), in each case based on the weight of the layer, wherein the cycloolefin polymer is amorphous and has a mean molecular weight $M_w$ in the range from 200 to 100,000, and this mean molecular weight $M_w$ of the cycloolefin polymer is at most 50 % of the mean molecular weight $M_w$ of the polyolefin, and the cycloolefin polymer is a homopolymer or a copolymer containing at most 20 % by weight of comonomer.

**2.** A polyolefin film as claimed in claim 1, wherein the COP-containing layer contains from 60 to 99 % by weight of a polyolefin, preferably a propylene polymer, and from 1 to 40 % by weight of cycloolefin polymer, in each case based on the weight of the layer.

**3.** A polyolefin film as claimed in claim 1 and/or 2, wherein the polyolefin, preferably propylene polymer, has a mean molecular weight $M_w$ of from 150,000 to 400,000.

**4.** A polyolefin film as claimed in one or more of claims 1 to 3, wherein the polyolefin, preferably propylene polymer, has such a molecular weight distribution that $M_w/M_n$ is in the range from 2 to 15, preferably in the range from 2 to 6.

**5.** A polyolefin film as claimed in one or more of claims 1 to 4, wherein the mean molecular weight $M_w$ of the cycloolefin polymer is from 200 to 20,000 and is at most 50 % of the mean molecular weight $M_w$ of the polyolefin.

**6.** A polyolefin film as claimed in one or more of claims 1 to 5, wherein the cycloolefin polymer has such a molecular weight distribution that $M_w/M_n$ is in the range from 1 to 5.

**7.** A polyolefin film as claimed in one or more of claims 1 to 6, wherein the cycloolefin polymer is polynorbornene, polydimethyloctahydronaphthalene, polycyclopentene or poly(5-methyl)norbornene.

**8.** A polyolefin film as claimed in one or more of claims 1 to 7, wherein the film contains a further transparent layer, and the film has a haze, measured in accordance with ASTM-D 1003-52, of less than 3.0.

**9.** A polyolefin film as claimed in claim 8, wherein the transparent layer contains from 75 to 100 % by weight of an $\alpha$-olefinic polymer.

**10.** A polyolefin film as claimed in one or more of claims 1 to 9, wherein the film contains a further opaque layer, and the film has a light transparency of less than 95 %, measured in accordance with ASTM-D 1003-77.

**11.** A polyolefin film as claimed in claim 10, wherein the opaque layer contains from 1 to 25 % by weight, preferably from 1 to 10 % by weight, of vacuole-initiating filler and/or pigment, in each case based on the weight of the layer.

**12.** A polyolefin film as claimed in one or more of claims 1 to 11, wherein the COP-containing layer forms the base layer, an interlayer or an outer layer of the film.

**13.** A polyolefin film as claimed in one or more of claims 1 to 11, wherein the transparent or opaque layer forms the

base layer, an interlayer or an outer layer of the film.

**14.** A polyolefin film as claimed in one or more of claims 1 to 13, wherein the polypropylene of the base layer, an interlayer and/or an outer layer has been peroxidically degraded.

**15.** A polyolefin film as claimed in one or more of claims 1 to 7, wherein the film has a single-layer structure and consists of the COP-containing layer.

**16.** A polyolefin film as claimed in one or more of claims 1 to 15, wherein the film is at least monoaxially oriented, preferably biaxially oriented.

**17.** A process for the production of a polyolefin film containing less than 50 % by weight of a cycloolefin polymer as in Claim 1, in which the polymers and/or polymer mixtures forming the film are compressed and warmed in an extruder, the melt(s) is(are) subsequently extruded through a flat-film die, and the resultant film is taken off over one or more rolls, oriented if desired, and heat-set and surface-treated, wherein the extrusion temperature is above the glass transition temperature of the amorphous cycloolefin polymer.

**18.** The use of a film as claimed in one or more of claims 1 to 16 as a packaging film, twist-wrap film, barrier film or for lamination or printing.

**19.** Packaging containing a film as claimed in one or more of claims 1 to 16.

**Revendications**

**1.** Feuille de polyoléfine comprenant au moins une couche renfermant au moins 50% en poids de polyoléfine et moins de 50% en poids de polymère cyclooléfinique (COP), dans chaque cas par rapport au poids de la couche, caractérisée en ce que le polymère cyclooléfinique est amorphe et présente un poids moléculaire moyen $M_w$ dans la gamme de 200 à 100 000, et ce poids moléculaire moyen $M_w$ du polymère cyclooléfinique est d'au plus 50% du poids moléculaire moyen $M_w$ de la polyoléfine, et le polymère cyclooléfinique est un homopolymère ou un copolymère ayant une fraction comonomère d'au plus 20% en poids.

**2.** Feuille de polyoléfine selon la revendication 1, caractérisée en ce que la couche renfermant du COP comprend de 60 à 99% en poids d'une polyoléfine, de préférence d'un polymère de propylène, et de 1 à 40% en poids de polymère cyclooléfinique, dans chaque cas par rapport au poids de la couche.

**3.** Feuille de polyoléfine selon la revendication 1 et/ou 2, caractérisée en ce que la polyoléfine, de préférence un polymère de propylène, présente un poids moléculaire moyen $M_w$ de 150 000 à 400 000.

**4.** Feuille de polyoléfine selon l'une ou plusieurs des revendications 1 à 3, caractérisée en ce que la polyoléfine, de préférence un polymère de propylène, présente une répartition de poids moléculaire telle que $M_w/M_n$ soit dans la gamme de 2 à 15, de préférence dans la gamme de 2 à 6.

**5.** Feuille de polyoléfine selon l'une ou plusieurs des revendications 1 à 4, caractérisée en ce que le poids moléculaire moyen $M_w$ du polymère cyclooléfinique est de 200 à 20 000 et d'au plus 50% du poids moléculaire moyen Mw de la polyoléfine.

**6.** Feuille de polyoléfine selon l'une ou plusieurs des revendications 1 à 5, caractérisée en ce que le polymère cyclooléfinique présente une répartition de poids moléculaire telle que $M_w/M_n$ soit dans la gamme de 1 à 5.

**7.** Feuille de polyoléfine selon l'une ou plusieurs des revendications 1 à 6, caractérisée en ce que le polymère cyclooléfinique est le polynorbornène, le polydiméthyloctahydronaphtalène, le polycyclopentène ou le poly(5-méthyl) norbornène.

**8.** Feuille de polyoléfine selon l'une ou plusieurs des revendications 1 à 7, caractérisée en ce que la feuille comprend une autre couche transparente, et la feuille présente une turbidité, mesurée conformément à ASTM-D 1003-52, inférieure à 3,0.

**9.** Feuille de polyoléfine selon la revendication 8, caractérisée en ce que la couche transparente renferme de 75 à 100% en poids d'un polymère $\alpha$-oléfinique.

**10.** Feuille de polyoléfine selon l'une ou plusieurs des revendications 1 à 9, caractérisée en ce que la feuille comprend une autre couche opaque et la feuille présente une transparence à la lumière inférieure à 95%, mesurée conformément à ASTM-D 1003-77.

**11.** Feuille de polyoléfine selon la revendication 10, caractérisée en ce que la couche opaque comprend de 1 à 25% en poids, de préférence de 1 à 10% en poids, de charge et/ou de pigment amorçant les vacuoles, dans chaque cas par rapport au poids de la couche.

**12.** Feuille de polyoléfine selon l'une ou plusieurs des revendications 1 à 11, caractérisée en ce que la couche renfermant du COP forme la couche de base, une couche intermédiaire ou une couche externe de la feuille.

**13.** Feuille de polyoléfine selon l'une ou plusieurs des revendications 1 à 11, caractérisée en ce que la couche transparente ou opaque forme la couche de base, une couche intermédiaire ou une couche externe de la feuille.

**14.** Feuille de polyoléfine selon l'une ou plusieurs des revendications 1 à 13, caractérisée en ce que le polypropylène de la couche de base, d'une couche intermédiaire et/ou d'une couche externe a été dégradée par un peroxyde.

**15.** Feuille de polyoléfine selon l'une ou plusieurs des revendications 1 à 7, caractérisée en ce que la feuille est monocouche et est constituée de la couche renfermant du COP.

**16.** Feuille de polyoléfine selon l'une ou plusieurs des revendications 1 à 15, caractérisée en ce que la feuille est orientée au moins monoaxialement, de préférence biaxialement.

**17.** Procédé de production d'une feuille de polyoléfine comprenant moins de 50% en poids d'un polymère cyclooléfinique selon la revendication 1, dans lequel les polymères et/ou mélanges de polymères formant la feuille sont comprimés et chauffés dans une extrudeuse, la (les) masse(s) fondue(s) est (sont) ensuite extrudée(s) à travers une filière plate, la feuille ainsi obtenue est retirée par-dessus un ou plusieurs rouleaux, éventuellement orientée, thermofixée et traitée en surface, caractérisé en ce que la température d'extrusion est supérieure à la température de transition vitreuse du polymère cyclooléfinique amorphe.

**18.** Utilisation d'une feuille selon l'une ou plusieurs des revendications 1 à 16 en tant que feuille d'emballage, feuille en papillote, feuille d'arrêt, ou pour la stratification ou l'impression.

**19.** Emballage comprenant une feuille selon l'une ou plusieurs des revendications 1 à 16.

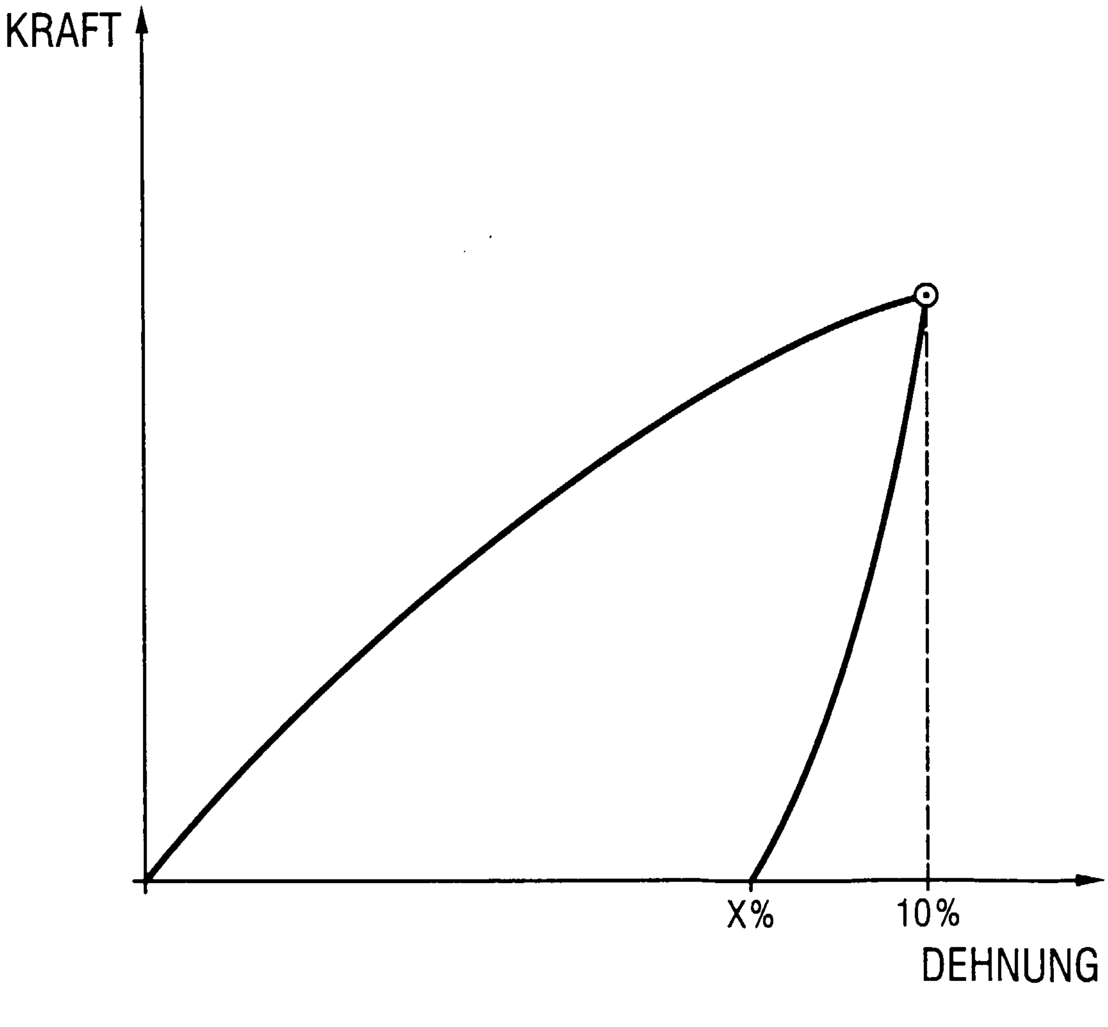


Fig. 1

Fig. 2a

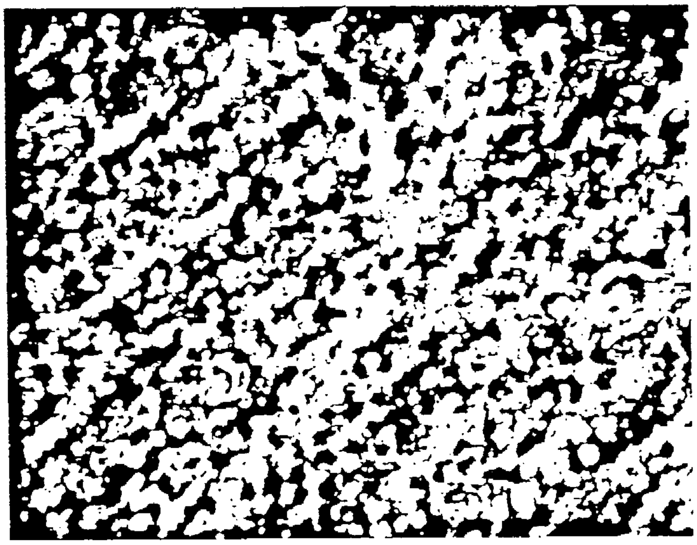

Fig. 2b